# EUROPEAN PATENT APPLICATION

(11) **EP 4 699 689 A1**
(43) Date of publication of application: **25.02.2026**
(21) Application number: 25179280.0
(22) Date of filing: 28.05.2025
(51) Int. Cl.: B01D 67/00, B01D 69/02

(54) **MEMBRANE USING 3D PRINTING AND ITS MANUFACTURING METHOD**

(30) Priority: 22.08.2024 KR 20240112450
(71) Applicant: Lee, Kwang Jin, Bucheon-si, Gyeonggi-do 14543 (KR)
(72) Inventor: Lee, Kwang Jin, Bucheon-si, Gyeonggi-do 14543 (KR)
(74) Representative: Isarpatent

(57) **Abstract**

The present disclosure relates to a membrane having uniform pore size and pore arrangement. The present disclosure provides a membrane including a plurality of pores, wherein the diameter of the plurality of pores is 100 µm or less, the porosity is 20 to 80%, the thickness is 3 to 500 µm, and the membrane is a single layer membrane.

## Description

### CROSS-REFERENCE TO RELATED APPLICATION(S)

This application claims benefit of priority to Korean Patent Application No.10-2024-0112450, filed on August 22, 2024, in the Korean Intellectual Property Office, the disclosures of which are incorporated herein by reference in their entirety.

### BACKGROUND

The present disclosure relates to a membrane using 3D printing and a method for manufacturing the same.

Nano-membrane technology, capable of selectively separating specific substances through pores, is widely used in fields such as medical devices, environment, food, pharmaceuticals, and medicine. In the medical device field, it is used in ostomy bags, syringe filters, hearing aids, etc. In the environmental field, it is used for water purification, water supply, and wastewater treatment. In the food industry, it is used for microbial removal or concentration in dairy products, beer, etc. In the pharmaceutical field, it is used for drug purification or separation. In daily life, it is used in air purifiers and water purifiers.

Such nano-membranes mostly have a wide pore size distribution, which has limited the enhancement of selectivity for substances targeted for removal or concentration. In particular, a small number of largest pores significantly affect the decrease in selectivity. Therefore, even among nano-membranes with the same average pore size, those with fewer largest pores exhibit superior selectivity. Reducing the number of largest pores is thus an important technology for ensuring the uniform selectivity of nano-membranes.

Currently, the only nano-membrane with a narrow pore size distribution is the track etched membrane, which is etched using laser or ion beams. This technology involves manufacturing a thin, flat film from a polymer, irradiating it with a laser or ion beam to penetrate the film and create holes, repeating this process numerous times to achieve porosity, and then fixing the pore shape through chemical etching to create the nano-membrane. Due to the characteristics of laser or ion beam processing and chemical etching processes, this is currently applicable restrictively to materials with excellent thermal and chemical resistance, such as polycarbonate, polyester, and polyimide. Achieving high porosity requires proportionally numerous laser or ion beam irradiations, leading to high processing costs. Consequently, it is currently used restrictively for expensive experimental purposes such as biological, microbiological, and analytical tests.

Therefore, there remains a demand for a technology that can produce membranes with uniform porosity using various materials at a lower cost.

### SUMMARY

An object of the present disclosure is to provide a membrane having uniform pore size and pore arrangement.

Another object of the present disclosure is to provide a membrane that can be manufactured from various materials and can reduce costs compared to laser-etched membranes.

Yet another object of the present disclosure is to provide a membrane with improved filtration performance and fouling resistance.

One embodiment of the present disclosure provides a membrane including a plurality of pores, wherein the diameter of the plurality of pores is 100 µm or less, the porosity is 20 to 80%, the thickness is 3 to 500 µm, and it is a single layer membrane.

In the present disclosure, the membrane may be such that the total number of pores in images measured by the following method is within -5% to +5% relative to the overall average number of pores.

### [Measurement Method]

Determination of magnification based on pore size: Magnification [X] = 500 / Pore diameter (µm)

Total number of pores in the image at the corresponding magnification: After obtaining a total of 20 images, the total number of pores is measured using ImageJ.

In the present disclosure, the membrane may be such that the pore diameter in images measured by the following method is within -5% to +5% relative to the average pore diameter.

### [Measurement Method]

Determination of magnification based on pore size: Magnification [X] = 500 / Pore diameter (µm)

Pore diameter in the image at the corresponding magnification: After obtaining a total of 20 images, the pore diameter is measured using ImageJ.

In the present disclosure, the membrane may be one in which the plurality of pores are regularly arranged.

Another embodiment of the present disclosure provides a method for manufacturing a membrane, including the steps of: a) forming a plurality of pore structures on a substrate; b) applying a membrane-forming solution between the plurality of pore structures and performing heat treatment; and removing the plurality of pore structures.

In the present disclosure, in step a), the plurality of pore structures may be formed by 3D printing.

In the present disclosure, in step b), the solid content of the membrane-forming solution may be 1 to 30 wt%, and the viscosity of the solution may be 1 to 1,000 mPa·s at 20°C.

In the present disclosure, in step b), the heat treatment may be performed at 60 to 200°C.

In the present disclosure, in step c), the removal of the pore structures is performed by applying water or an acidic solution.

The present disclosure provides a membrane with uniform pore size and pore arrangement, enabling easy control of porosity and improved filtration performance compared to conventional membranes.

Furthermore, by utilizing 3D printing, the present disclosure enables manufacturing from various raw materials compared to conventional laser-etched membranes, and significantly reduces manufacturing costs by shortening the manufacturing time by more than 3 times compared to directly manufacturing the membrane solely by 3D printing.

### BRIEF DESCRIPTION OF THE DRAWINGS

FIG. 1 illustrates various shapes of nanomembranes manufactured according to the present disclosure;
FIG. 2 is a diagram illustrating the nanomembrane manufacturing method of the present disclosure;
FIG. 3 illustrates the process of forming pillar structures using 3D printing;
FIG. 4 illustrates surface images of the membranes of Example 1, Comparative Example 1, and Comparative Example 2; and
FIG. 5 illustrates surface images of the membranes of Example 1 and Comparative Example 3.

### DETAILED DESCRIPTION OF EXEMPLARY EMBODIMENTS

Hereinafter, embodiments of the present disclosure will be described in detail with reference to the accompanying drawings so that those skilled in the art may easily implement the disclosure. However, the present disclosure may be embodied in various forms and is not limited to the embodiments described herein. Throughout the specification, similar parts are denoted by the same reference numerals.

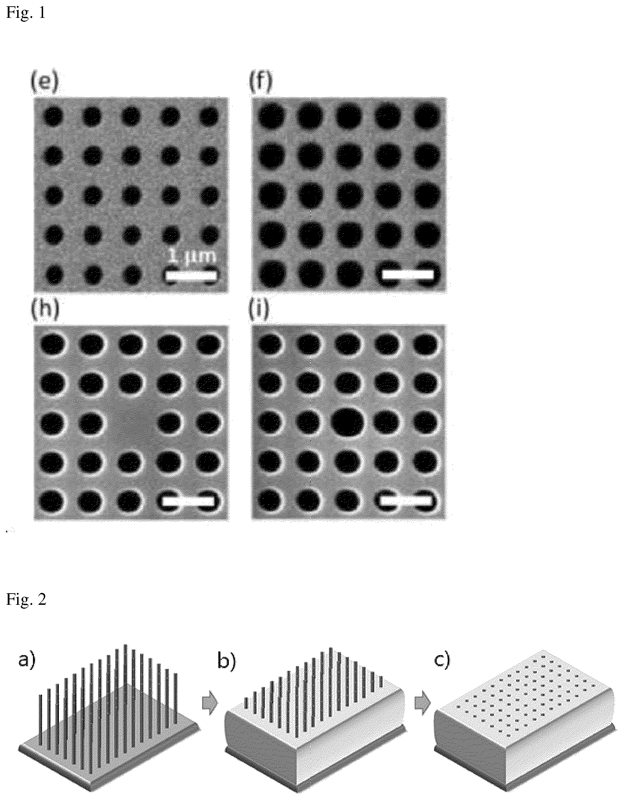

FIG. 1 illustrates various membrane shapes manufactured according to the present disclosure. Referring to FIG. 1, the pores in the present disclosure may be formed and arranged in various shapes.

One embodiment of the present disclosure provides a membrane including a plurality of pores, wherein the pores have a diameter of 100 µm or less, a porosity of 20 to 80%, a thickness of 3 to 500 µm, and the membrane is a single-layer membrane.

Preferably, the membrane may have a porosity of 50 to 80% and a thickness of 10 to 500 µm.

In the present disclosure, the membrane may be such that the total number of pores in images measured by the following method is within -5% to +5%, preferably -3% to +3%, relative to the overall average number of pores.

### [Measurement Method]

Determination of magnification based on pore size: Magnification [X] = 500 / pore diameter (µm)

Total number of pores in the image at the corresponding magnification: After obtaining a total of 20 images, the total number of pores is measured using ImageJ.

When the total number of pores in the image measured by the measurement method is within -5% to +5% relative to the overall average number of pores, the membrane may exhibit uniform filtration performance, etc., thus this range is preferable.

Furthermore, in the present disclosure, the membrane may be such that the pore diameter in images measured by the following method is within -5% to +5%, preferably -3% to +3%, relative to the average pore diameter.

### [Measurement Method]

Determination of magnification based on pore size: Magnification [X] = 500 / pore diameter (µm)

Pore diameter in the image at the corresponding magnification: After obtaining a total of 20 images, the pore diameter is measured using ImageJ.

When the pore diameter in the image measured by the measurement method is within -5% to +5% relative to the average pore diameter, the membrane can exhibit uniform filtration performance, etc., thus this range is preferable.

In the present disclosure, the membrane may be one in which the plurality of pores are regularly arranged. In the present disclosure, the term "regularly" means that the plurality of pores are arranged according to a certain rule.

In addition, in the present disclosure, "regularly" may mean that the distance between the nearest adjacent pores is the same or differs by -5% to +5% from the average distance.

In the present disclosure, the membrane may be manufactured from polymer materials such as polysulfone, polyethersulfone, polyvinylidene fluoride (PVDF), nylon, polyethylene, polypropylene, nitrocellulose, cellulose acetate, polytetrafluoroethylene (PTFE), as well as ceramics, metals, carbon isomers, etc.

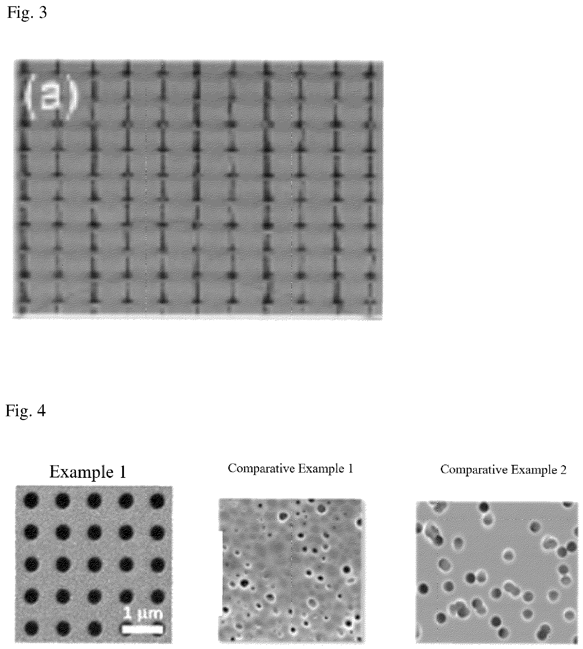

FIG. 2 is a diagram illustrating the nanomembrane manufacturing method of the present disclosure and FIG. 3 illustrates the process of forming pillar structures using 3D printing.

Referring to FIGS. 2 and 3, another embodiment of the present disclosure provides a nanomembrane manufacturing method including the steps of: a) forming a plurality of pore structures on a substrate; b) applying a nanomembrane forming solution between the plurality of pore structures and performing heat treatment; and c) removing the plurality of pore structures.

In the present disclosure, step a) is the step of forming a plurality of pore structures on a substrate using 3D printing. The formation of the pore structures may be performed by 3D printing using a nano-nozzle developed by the Korea Electrotechnology Research Institute (KERI). Specifically, support ink is ejected from the nano-nozzle, and upon ejection, the solvent evaporates, leaving only the remaining support material to be stacked, thereby forming pillars. At this time, the solid content concentration of the ejected support ink may be 0.1 to 10 wt%, but is not limited thereto, and the diameter, etc., of the pore structures may be easily adjusted according to the application.

In addition, when 3D printing the pore structures, various methods may be applied to prevent pore clogging at the bottom surface, such as applying a thin layer of support ink to the bottom or printing the pore pillars higher than the membrane thickness at the top (the opposite side of the bottom).

In step a), the pore structures may take various shapes, such as cylindrical, triangular, or rectangular pillars. By forming engraved or embossed protrusions on the pillar surfaces, a membrane may be manufactured in which the pore channels of the separation membrane are formed according to this pillar shape.

In step a), the pore structure material may be a support material for 3D printing that easily dissolves in water, such as polyvinyl alcohol (PVA), or a material that dissolves in an acidic solution, such as vanadium oxide. However, it is not limited thereto, and any material that may be easily dissolved by a solvent that does not dissolve the nanomembrane material may be used without limitation.

In the present disclosure, step b) is the step of applying a nanomembrane forming solution between the plurality of pore structures and performing heat treatment. The nanomembrane forming solution may include polymer materials such as polysulfone, polyethersulfone, polyvinylidene fluoride (PVDF), nylon, polyethylene, polypropylene, nitrocellulose, cellulose acetate, polytetrafluoroethylene (PTFE), as well as ceramics, metals, carbon isomers, etc.

In the present disclosure, in step b), the solid content of the membrane-forming solution may be 1 to 30 wt%, and the viscosity of the solution may be 1 to 1,000 mPa·s at 20°C. The solid content and solution viscosity may be changed according to the diameter of the manufactured pore structures, the nano-nozzle, etc., but the formation of pore structures and ejection are easy within this range, thus this range is preferable.

In step b), applying the nanomembrane solution between the pore structures may be performed inside the 3D printer, or it may be performed in a separate device after removing the pore structures from the 3D printer. If performed in a separate device, the pore structures can be transferred from the 3D printer to the separate device through an automated process, which may utilize conventional technology.

In addition, the process of applying the nanomembrane solution between the pore structures may be any method widely known in the art, without limitation. For example, the nanomembrane solution may be injected outside the pore structures and applied by the flow of the solution over time due to height difference. To make this more precise, a dip coating device may be used, or a spin coating device may be used.

In addition, when manufacturing a thin nanomembrane, a vacuum chuck plate may be used as the substrate, the pore structures formed on the vacuum chuck plate, and then the separation membrane solution applied. In this case, potential problems such as wrinkling of the separation membrane may be prevented.

In step b), the heat treatment may be performed at 60 to 200°C, and the temperature may be appropriately selected based on the components included in the nanomembrane solution. The heat treatment device may be integrated with the device for applying the nanomembrane solution or it may be independent of that device.

In the present disclosure, step c) is the step of removing the pore structures. The solution used for removing the pore structures may be used without limitation as long as it dissolves the pore structures without dissolving the nanomembrane, but preferably, water or an acidic solution may be applied.

Furthermore, because the membrane according to the present disclosure is manufactured using 3D printing, the wastewater usage is within 1 ton per 1,000 m² of membrane, which is a drastic reduction compared to conventional methods: within 12 tons for nonsolvent induced phase separation (NIPS), within 5 tons for thermally induced phase separation (TIPS), and within 3 tons for MSCS.

Hereinafter, specific examples according to the present disclosure will be described.

### Examples 1 to 3

Using 3D printing with a nano-nozzle developed by the Korea Electrotechnology Research Institute, a plurality of pore structures were formed on a substrate using polyvinyl alcohol. Subsequently, a membrane-forming solution containing 1 to 30 wt% polyvinylidene fluoride (PVDF) with a viscosity of 1 to 1,000 mPa·s at 20°C was applied onto the substrate with the pore structures to fill the spaces between the pore structures. The substrate was then heat-treated at 60 to 200°C, and the pore structures were removed using water to manufacture a membrane. The thickness of the manufactured membrane was 200 µm.

The diameters of the plurality of pore structures are as shown in Table 1 below.

**[Table 1]**

| Category | Example 1 | Example 2 | Example 3 |
|---|---|---|---|
| Pore Size (µm) | 0.1 | 1.0 | 10.0 |

### Comparative Example 1

A polyethersulfone MF membrane filter (diameter 47 mm) manufactured by GVS and sold by All About Lab (aalab.co.kr) was used.

### Comparative Example 2

A polycarbonate track etched membrane filter (diameter 47 mm) manufactured by GVS and sold by All About Lab (aalab.co.kr) was used.

### Comparative Example 3

Using 3D printing with a nano-nozzle developed by the Korea Electrotechnology Research Institute, a membrane was manufactured using Polyvinylidene fluoride (PVDF). The thickness of the manufactured membrane was 200 µm, and the average pore size was 0.1 µm.

### Experimental Example 1

Using the membranes manufactured in Examples 1 to 3, the average pore number error and average pore diameter error were measured using the following method, and the results are shown in Tables 2 and 3 below.

### [Measurement Method]

Determination of magnification based on pore size: Magnification [X] = 500 / pore diameter (µm)

Total number of pores in the image at the corresponding magnification: After obtaining a total of 20 images, the total number of pores is measured using ImageJ.

Pore diameter in the image at the corresponding magnification: After obtaining a total of 20 images, the pore diameter is measured using ImageJ.

**[Table 2]**

| Category | Example 1 | Example 2 | Example 3 |
|---|---|---|---|
| Max. Pore Count (Number) | 28,869 | 28,869 | 28,869 |
| Min. Pore Count (Number) | 28,697 | 28,697 | 28,697 |
| Average Pore Count (Number) | 28,783 | 28,783 | 28,783 |
| Error % | ±3 | ±3 | ±3 |

**[Table 3]**

| Category | Example 1 | Example 2 | Example 3 |
|---|---|---|---|
| Max. Pore Diameter (µm) | 0.103 | 1.03 | 10.3 |
| Min. Pore Diameter (µm) | 0.0997 | 0.997 | 9.97 |
| Average Pore Diameter (µm) | 0.100 | 1.00 | 10.0 |
| Error % | ±3 | ±3 | ±3 |

Referring to Tables 2 and 3, it may be confirmed that the membrane according to the present disclosure has a pore count error within -3% to +3% relative to the average pore count, and a pore diameter error within -3% to +3% relative to the average pore diameter.

### Experimental Example 2

To confirm whether the pores of the membranes according to Example 1, Comparative Example 1, and Comparative Example 2 were regularly formed, photographs were taken, and the results are shown in FIG. 4.

FIG. 4 illustrates surface images of the membranes of Example 1, Comparative Example 1, and Comparative Example 2.

Referring to FIG. 4, it may be confirmed that the pores of the membrane according to the present disclosure are arranged according to a certain rule, whereas the pores of the membranes of Comparative Examples 1 and 2 are formed without a regular rule.

### Experimental Example 3

The manufacturing times for the membranes according to Example 1 and Comparative Example 3 were measured, and the results are shown in Table 4 below. This is the time required to produce one disc-shaped membrane filter with a diameter of 13 mm and a thickness of 10 µm using one piece of equipment.

**[Table 4]**

| Category | Example 1 | Comparative Example 3 |
|---|---|---|
| Manufacturing Time (s/EA) | 13 | 65 |

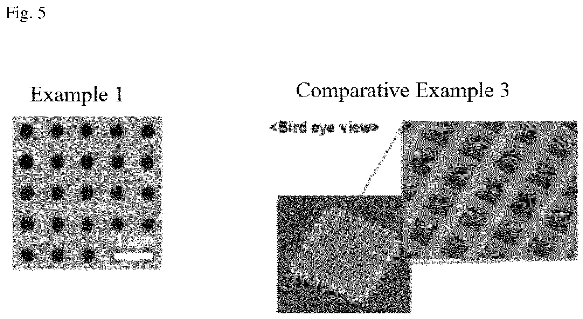

FIG. 5 illustrates surface images of the membranes of Example 1 and Comparative Example 3.

Referring to FIG. 5 and Table 4, it may be confirmed that when using 3D printing according to the present disclosure, a membrane may be manufactured about 5 times faster than when manufacturing the membrane directly solely by 3D printing.

## Claims

1. A membrane comprising a plurality of pores, wherein the diameter of the plurality of pores is 100 µm or less, the porosity is 20 to 80%, the thickness is 3 to 500 µm, and the membrane is a single layer membrane.

2. The membrane of claim 1, wherein the total number of pores in images measured by the following method is within -5% to +5% relative to the overall average number of pores.
[Measurement Method]
Determination of magnification based on pore size: Magnification [X] = 500 / Pore diameter (µm)
Total number of pores in the image at the corresponding magnification: After obtaining a total of 20 images, the total number of pores is measured using ImageJ.

3. The membrane of claim 1, wherein the pore diameter in images measured by the following method is within -5% to +5% relative to the average pore diameter.
[Measurement Method]
Determination of magnification based on pore size: Magnification [X] = 500 / Pore diameter (µm)
Pore diameter in the image at the corresponding magnification: After obtaining a total of 20 images, the pore diameter is measured using ImageJ.

4. The membrane of claim 1, wherein the plurality of pores are arranged regularly.

5. A method for manufacturing a membrane, comprising:
a) forming a plurality of pore structures on a substrate;
b) applying a membrane-forming solution between the plurality of pore structures and performing heat treatment; and
c) removing the plurality of pore structures.

6. The method of claim 5, wherein in step a), the plurality of pore structures are formed by 3D printing.

7. The method of claim 5, wherein in step b), the solid content of the membrane-forming solution is 1 to 30 wt%, and the viscosity of the solution is 1 to 1,000 mPa·s at 20°C.

8. The method of claim 5, wherein in step b), the heat treatment is performed at 60 to 200°C.

9. The method of claim 5, wherein in step c), the removal of the pore structures is performed by applying water or an acidic solution.
